# EUROPÄISCHE PATENTSCHRIFT

(11) **EP 3 413 014 B1**
(45) Veröffentlichungstag und Bekanntmachung des Hinweises auf die Patenterteilung: **19.07.2023**
(21) Anmeldenummer: 18175627.1
(22) Anmeldetag: 01.06.2018
(51) Int. Cl.: G01B 11/02, G01V 8/20

(54) **VERFAHREN UND VORRICHTUNG ZUM ERFASSEN UND VERMESSEN VON OBJEKTEN**
DEVICE AND METHOD FOR DETECTING AND MEASURING OBJECTS
PROCÉDÉ ET DISPOSITIF DE DÉTECTION ET DE MESURE D'OBJETS

(30) Priorität: 08.06.2017 CH 7432017; 19.03.2018 CH 3522018
(43) Veröffentlichungstag der Anmeldung: 12.12.2018
(73) Patentinhaber: Brauss, Stephan, 9402 Mörschwil (CH)
(72) Erfinder: Brauss, Stephan, 9402 Mörschwil (CH)
(74) Vertreter: Swisspat Riederer Hasler Patentanwälte AG

(56) Entgegenhaltungen:
- GB-A- 2 147 996
- US-A- 3 588 480
- US-A- 5 266 810
- US-A1- 2012 018 925
- US-B2- 8 002 210
- MUSA E: "Laser-based light barrier", APPLIED OPTICS, OPTICAL SOCIETY OF AMERICA, WASHINGTON, DC, US, vol. 47, no. 19, 1 July 2008 (2008-07-01), pages 3415-3422, XP001514936, ISSN: 0003-6935, DOI: 10.1364/AO.47.003415

## Beschreibung

Die Erfindung betrifft ein Verfahren und eine Vorrichtung zum Erfassen und Vermessen von Objekten beim Passieren eines Überwachungsbereiches.

### Stand der Technik

Lichtschranken finden in der Technik vielfältig Verwendung. Eine typische Anwendung ist die Detektierung von beweglichen Gegenständen außerhalb einer Führung. Hierzu werden in der Regel Rahmenlichtschranken verwendet, bei denen ein oder eine Mehrzahl von Lichtsendern und zugeordneten Lichtempfängern in einander gegenüberliegenden Schenkeln eines Trägers der Lichtschranke angeordnet sind, um einen aus einzelnen Lichtwegen aufgebauten Überwachungsbereich zu bilden, in der Folge als Tastfeld bezeichnet. Für gewöhnlich sind diese Schenkel mittels eines Verbindungsschenkels und einer Traverse, welche rechtwinklig von den Schenkeln abstehen, zu einem Rahmen verbunden.

Befindet sich ein Gegenstand im Tastfeld oder bewegt sich ein Gegenstand durch das Tastfeld hindurch und unterbricht mindestens einen Lichtweg, ist die vom Lichtempfänger erfassbare Lichtmenge betragsmäßig verändert. Die Veränderung in der Lichtmenge ist mit einer dafür vorgesehenen und eingerichteten Elektronik messbar und mit einem justierbaren Schwellenwert vergleichbar. Eine Abweichung zwischen dem gemessenen Wert der Lichtmenge und dem Schwellenwert ist in ein Schaltsignal zur Anzeige einer Gegenwart des Gegenstandes im Tastfeld umsetzbar.

In der DE 44 38 798 C3 ist eine Rahmen-Lichtschranke mit zwei einander gegenüber angeordneten und miteinander durch Verbindungsschenkel zu einem Rahmen verbundenen Seitenschenkeln beschrieben, bei der jeder Seitenschenkel im Querschnitt U-förmig ausgebildet ist, um eine Optik und Optikabdeckung aufnehmen zu können. Ferner ist eine über einen frontseitigen Randbereich der Optikabdeckung greifende Abdeckung als Prallschutz vorgesehen, welcher die Optikabdeckung frontseitig bis auf einen Schlitz zum Lichtdurchtritt abdeckt und im Bereich der Optikabdeckung abgeschrägte Flächen aufweist.

Lichtgitter umfassen eine Mehrzahl von Sendeelementen und zugeordneten Empfangselementen, so dass jeweils ein Paar aus einem Sendeelement und einem Empfangselement eine Lichtschranke bildet, die erkennt, ob der zwischen dem Sendeelement und dem Empfangselement aufgespannte Lichtstrahl von einem Objekt unterbrochen ist oder nicht. Lichtgitter weisen kein homogenes Tastfeld auf, sondern besitzen, wie die Bezeichnung «Gitter» bereits suggeriert, einzelne gebündelte Lichtstrahlen. Die Sendeelemente und Empfangselemente sind jeweils in einer Sendeeinheit und einer Empfangseinheit zusammengefasst, die einander gegenüber montiert werden. Eine Kontrolleinheit steuert Sendeeinheit und Empfangseinheit. Sie wertet die von der Sendeeinheit ausgesendete und von der Empfangseinheit empfangene Lichtmenge aus und erfasst anhand dieser Information Objekte, die das Tastfeld passieren. Die Kontrolleinheit verfügt üblicherweise über einen oder mehrere Ausgänge sowie evtl. über Eingänge, um mit anderen Geräten Daten auszutauschen. Über einen Ausgang teilt das Lichtgitter beispielsweise einer übergeordneten Einheit mit, dass ein Objekt erfasst wurde. Über die evtl. vorhandenen Eingänge kann eine untere Grössengrenze festgelegt werden, ab der Objekte erfasst werden sollen. Manche auf dem Markt verfügbaren Geräte bieten zudem die Möglichkeit, auch eine Grenze für die minimale Zeit festzulegen, die ein Objekt das Tastfeld bedecken muss, damit es erfasst werden soll. Die meisten Geräte sind mit einer Funktion zum Minimieren des Einflusses von Umgebungslicht ausgestattet.

Ein herkömmliches Anwendungsfeld für Lichtgitter ist die Sicherheitstechnik. Die parallelen Lichtstrahlen dienen dabei als eine Art virtuelle Wand, mit der eine potentielle Gefahrenquelle abgesichert werden kann. Dabei kann ein Alarm ausgelöst oder eine Aktion veranlasst werden, wenn ein oder mehrere Lichtstrahlen unterbrochen werden.

In der Automatisierungstechnik werden Lichtgitter eingesetzt, um die Ausdehnung von Objekten anhand der Anzahl unterbrochener Strahlen zu messen. Dabei ist die Genauigkeit der Messung durch den Abstand der Lichtstrahlen bestimmt.

In der US 3 588 480 wird die Bestimmung des Volumens eines sich auf einem Fördermittel (z.B. einem Förderband) befindlichen beliebigen Objekts beschrieben, das auf dem Fördermittel durch einen Sensor hindurchbewegt wird. Der Sensor bestimmt mit Hilfe einer vorgegebenen Anzahl von horizontal und vertikal im gleichen Abstand angeordneten parallelen Strahlengängen anhand der Anzahl der unterbrochenen Strahlengänge kontinuierlich Höhe und Breite des passierenden Objekts. Jeder Strahlengang wird von einem einzigen Sendeelement erzeugt und einem einzigen ihm zugeordneten Empfangselement empfangen. Die Länge des Objekts wird anhand der Dauer, die es den Sensor bedeckt, und anhand der Fördergeschwindigkeit bestimmt. Es wird als vorteilhaft betrachtet, wenn das Objekt vor dem Eintritt in den Sensor ausgerichtet wird. Durch die eindeutige Zuordnung von Sendeelement zu Empfangselement mit einzelnen gerichteten und gebündelten Strahlengängen ist die Auflösung durch den Abstand der Sende-/ Empfangselement-Paare untereinander bestimmt.

Wie in der US 3 588 480 beschreibt die GB 2 147 996 ein Verfahren zur Bestimmung des Volumens eines sich auf einem Förderband befindlichen Objekts, mit dem Unterschied, dass die Sendeelemente und Empfangselemente durch einen zyklisch getakteten Betrieb enger angeordnet werden können. Der von einem Sendeelement erzeugte gerichtete und gebündelte Strahlengang kann durch die engere Anordnung zwar gleichzeitig auf mehrere Empfangselemente auftreffen, weil jeweils aber nur ein Sende-/Empfangselement-Paar aktiv ist, kann die genaue Dimension dennoch festgestellt werden. Die Auflösung ist durch den Abstand der Sende-/Empfangselement-Paaren untereinander bestimmt.

Die US 2012/ 018925 beschreibt ein Inspektionssystem zur Bestimmung von Charakteristiken von geblasenen Formen, primär der Dicke der beiden Wände auf gleicher Höhe, wobei Sendeelemente zyklisch parallel ausgerichtetes, gebündeltes Licht in mindestens zwei Wellenlängen aussenden, welches von Empfangselementen empfangen wird. Sendeelemente und Empfangselemente sind paarweise in einer Ebene angeordnet, die Auflösung ist durch den Abstand der Paare untereinander bestimmt, denn ein Paar angeordnet auf einer bestimmten Höhe bestimmt die Charakteristik auf dieser Höhe.

Die US 5 266 810 beschreibt ein Verfahren zur Bestimmung der Höhe eines sich auf einem Förderband durch einen Sensor hindurchbewegenden Objekts, wobei die Empfangseinheit aus einer hohen Anzahl einzeln ansprechbarer Empfangselemente 0 bis N besteht, die jeweils den Wert 0 für den Zustand "bedeckt durch Objekt", oder den Wert 1 für "frei" liefern. Empfangselement 0 befindet sich ganz unten am Sensor auf der Höhe des Förderbands (oder sogar darunter), Empfangselement N am oberen Ende des Sensors. Passiert ein Objekt den Sensor, dann wird angenommen, dass alle Empfangselemente unterhalb der Oberkante des Objekts den Wert 0 liefern, alle darüber den Wert 1. Da eine hohe Anzahl an Empfangselementen (im Patent werden 160 genannt) aufgrund technischer Limitationen nicht parallel, sondern beispielsweise nur in 16er Paketen abgefragt werden kann, erfolgt die Abfrage zweistufig: Es werden zum Beispiel zunächst 9 Abschnitte zu je 17 Empfangselementen gebildet. Die Empfangselemente mit der tiefsten Nummer jedes Abschnitts werden zur Gruppe 0 zusammengefasst. Die verbleibenden Empfangselemente eines Abschnitts bilden eine eigene Gruppe. Wird Gruppe 0 gelesen, dann ist bestimmt, in welchem Abschnitt sich die Oberkante des Objekts befindet. Somit muss nur noch die diesem Abschnitt zugeordnete Gruppe gelesen werden, um die Höhe zu ermitteln. Die Anzahl Empfangselemente bestimmt unmittelbar die Auflösung. Um die Auflösung zu erhöhen, wird deren Anzahl erhöht, was durch das beschriebene Verfahren möglich wird.

Lichtgitter können auch verwendet werden, um Teile zu zählen, die beispielsweise von einer Fördervorrichtung fallen. Das Lichtgitter wird dann so angeordnet, dass seine Überwachungsebene ein üblicherweise horizontales Fenster überdeckt, durch welches die Teile hindurchfallen. Hier eignet sich ein Lichtgitter vor allem dann, wenn die Teile keine genau vorhersagbare Bewegungsbahn verfolgen und deshalb nicht immer an der gleichen Stelle, sondern nur innerhalb eines gewissen Bereichs vermessen oder gezählt werden können. Ein Lichtgitter kann aber nur Teile erfassen, die eine gewisse Mindestgröße aufweisen. Dies liegt daran, dass ein Lichtgitter ohne zusätzliche Maßnahmen nur ein Auflösungsvermögen besitzt, welches dem Strahlabstand des Lichtgitters entspricht.

Bekannte Lichtgitter haben den Nachteil, dass sie Objekte nicht oder nur in der durch den Strahlabstand vorgegebenen Auflösung klassifizieren können. Unter Klassifizieren ist im Rahmen der vorliegenden Erfindung gemeint, dass ein Objekt anhand vorgegebener Merkmale einer bestimmten Klasse zugeordnet werden kann, mit dem Zweck, Objekte differenzieren zu können. Beispielsweise können konventionelle Lichtgitter beim Zählen von gleichen Metallfedern nicht zuverlässig feststellen, wenn zwei Federn ineinander verwickelt sind und das Tastfeld daher ohne Abstand untereinander passieren. Die ineinander verwickelten Federn werden deshalb nur als eine Feder erfasst. Konventionelle Lichtgitter können auch nicht Fehlteile (z.B. bei Plastikgussteilen vorhandene Stege zum Austrennen der Teile oder Schrauben mit fehlendem Kopf) zuverlässig aussortieren. Auch können konventionelle Lichtgitter mehrere verschieden grosse Schrauben, die zwar zeitlich nacheinander aber untereinander vermischt den Überwachungsbereich passieren, nicht nach Grössenklassen geordnet getrennt zählen, da sie deren Grösse nicht ausreichend genau messen können.

Bekannte Lichtgitter können zudem Objekte mit dünnen oder (teil-) durchsichtigen Bereichen, z.B. Milchglas, oder Objekte, die während dem Passieren des Tastfelds rotieren, nicht zuverlässig als ein einzelnes Objekt erkennen.

Lichtschranken mit einem homogenen Lichtfeld, das von einer Mehrzahl Empfangselemente detektiert wird, sind aus den Dokumenten US8002210 B2 und Musa E,: "Laser-based light barrier",Applied Optics, Nr. 19 (2008), Seiten 3415-3422 bekannt.

### Aufgabe der Erfindung

Ausgehend von dem eingangs beschriebenen Stand der Technik ist deshalb ein Ziel der vorliegenden Erfindung, ein Verfahren und eine Vorrichtung zur Verfügung zu stellen, mit deren Hilfe Objekte beliebiger Formen und Materialien, z.B. auch solche mit dünnen oder (teil-) durchsichtigen Bereichen, in einer Auflösung, die nicht durch den Abstand der Sendeelemente untereinander und dem Abstand der Empfangselemente untereinander limitiert ist, vermessen und damit zuverlässig erfasst, gezählt und klassifiziert werden können. Ein zweites Ziel ist, dass Objekte, die während dem Passieren des Überwachungsbereichs rotieren, zuverlässig erfasst und gezählt werden können. Ein drittes Ziel ist, dass Objekte zuverlässig nach ihrer maximalen Ausdehnung und/oder ihrer Verweilzeit klassifiziert werden können. Ein viertes Ziel ist, dass Objekte zuverlässig nach ihrer Fläche klassifiziert werden können. Ein weiteres Ziel ist, dass Objekte zusätzlich nach Ihrer Form, d.h. nach Ihrer zeitpunkts- bzw. ortsabhängigen Ausdehnung klassifiziert werden können. Ein weiteres Ziel ist, dass die Empfindlichkeit der Vorrichtung gegenüber Störungen auf Kosten einer geringeren Arbeitsgeschwindigkeit verbessert werden kann und vice versa. Auch ist es wünschenswert, dass die Form der erfassten Objekte visualisiert werden kann.

### Definitionen:

Ein Überwachungsbereich besteht aus einem oder mehreren Tastfeldern. Ein Tastfeld wird durch einen Senderblock und einem zu diesem parallel und in einer Ebene angeordneten Empfängerblock erzeugt. Der Senderblock emittiert Strahlung, die vom Empfängerblock empfangen und gemessen wird.

Unter «Vermessen» wird im Rahmen der vorliegenden Erfindung verstanden, dass einer oder mehrere der folgenden Werte eines Objekts, das den Überwachungsbereich der Vermessungsvorrichtung passiert, ermittelt werden: Die zeitpunktabhängige Ausdehnung des Objekts, die Dauer, während der das Objekt ein Tastfeld bedeckt, aufintegrierte Ausdehnung des Objekts und die Form des Objekts.

Mit «Ausdehnung» bzw. «Grösse» des Objekts ist immer die Projektion des Objekts auf den Empfänger, bzw. der Schattenwurf der von der Sendeeinheit emittierten Strahlung auf die Empfangseinheit gemeint.

«Klassifizieren» bedeutet, dass ein Objekt anhand vorgegebener Merkmale einer bestimmten Klasse zugeordnet werden kann, mit dem Zweck, Objekte differenzieren zu können.

Die Minimalausdehnung sₘᵢₙ ist ein anwendungsspezifischer unterer Schwellenwert, der vorgegeben wird. Er entspricht der Ausdehnung des kleinsten Objekts, das erfasst werden soll.

Die Ausdehnung s_{min_in} ist ein vorrichtungs- und anwendungsspezifischer Schwellenwert, der tiefer als die Minimalausdehnung sₘᵢₙ angesetzt wird. Er repräsentiert die intern verwendete Schwelle für die Ausdehnung, ab der die Vorrichtung ein Objekt als "ist ins Tastfeld eingetreten" detektiert.

Die Ausdehnung s_{min_out} ist ein vorrichtungs- und anwendungsspezifischer Schwellenwert, der tiefer als die Ausdehnung s_{min_in} angesetzt wird. Er repräsentiert die intern verwendete Schwelle für die Ausdehnung, ab der die Vorrichtung ein Objekt als "hat das Tastfeld verlassen" detektiert (Ausnahme: siehe Erklärungen zum Begriff Lückenunterdrückungszeit).
tₛ ist der Zeitpunkt, wenn die Vorrichtung ein Objekt als "ist ins Tastfeld eingetreten" detektiert.
tₑ ist der Zeitpunkt, wenn die Vorrichtung ein Objekt als "hat das Tastfeld verlassen" detektiert.

Die Verweilzeit Δt ist die Differenz zwischen tₑ und tₛ, d.h. die von der Vorrichtung ermittelte Zeit, während der das Objekt das Tastfeld bedeckt hat.

Die Lückenunterdrückungszeit gibt vor, wie lange die Vorrichtung ein Objekt noch nicht als "hat das Tastfeld verlassen" detektieren soll, obwohl die gemessene Ausdehnung bereits unter der Schwelle s_{min_out} gefallen ist. Steigt in diesem Fall die gemessene Ausdehnung innerhalb der Lückenunterdrückungszeit wieder über die Schwelle s_{min_in}, dann wird das vorherige Unterschreiten der Schwelle s_{min_out} nicht berücksichtigt. Eine Lückenunterdrückungszeit > 0 wird gesetzt, wenn das zu erfassende Objekt einen oder mehrere dünne oder (teil-) durchsichtige Bereiche aufweist oder wenn es beim Passieren des Tastfelds rotiert, d.h. durch die Rotation das Tastfeld betritt, verlässt und danach wieder betritt.

Die Ausdehnung sₘₐₓ entspricht dem maximalen Wert sᵢ der im Zeitraum tₛ bis tₑ liegt.

### Beschreibung

Erfindungsgemäss werden die vorerwähnten Ziele durch die Merkmale der Ansprüche 1 und 6 realisiert. Vorteilhafte Weiterbildungen sind in den Unteransprüchen definiert. Die Erfindung betrifft ein Verfahren und eine Vorrichtung zum Erfassen und Vermessen von Objekten beim Passieren eines Überwachungsbereichs.

Die vorliegende Erfindung bezieht sich nicht auf eine wie eingangs in den zitierten Patenten beschriebene Sensorvorrichtung in Gestalt eines aus einzelnen, von Sendeelementen emittierten, gebündelten Strahlengängen aufgebauten Lichtgitters oder solche Sensorvorrichtungen, die erkennen, welche Empfangselemente Strahlung empfangen und welche nicht, sondern auf eine neuartige Vorrichtung, insbesondere Lichtvorhang, mit einem oder mehreren im Wesentlichen homogenen und flächigen Tastfeldern, wobei eine Empfangseinheit die empfangene Strahlungsmenge nur gesamthaft misst und somit lediglich ein einziges Signal zur Verfügung stellt. Die Anzahl und der Abstand der benachbarten Sende- und Empfangselemente voneinander bestimmt nicht mehr direkt die Auflösung, tatsächlich können beispielsweise mit im Abstand von 6mm angeordneten Sende- und Empfangselementen Auflösungen unter 0.5mm erreicht werden.

Gemäss dem Verfahren bedeckt ein an einem ersten Rand des Überwachungsbereichs angeordneter erster Senderblock zur Aussendung von vorzugsweise elektromagnetischer Strahlung den Überwachungsbereich mit einer flächigen Strahlungsebene. Der Senderblock beinhaltet eine Sendeeinheit, die mit n Sendeelementen bestückt ist. Die von jedem Sendelement emittierte Strahlung ist nicht gebündelt, sondern wird breitwinklig ausgesendet. Breitwinklig heisst, dass ein Sendelemente einen grossen Prozentsatz der von ihm erzeugten Strahlung kegelförmig aussendet, beispielsweise 90% der Strahlungsmenge in einem Kegel mit beispielsweise einem Öffnungswinkel von +-5 Grad, +-10 Grad, oder +-15 Grad um die Hauptstrahlungsrichtung. Die von den n Sendelementen jeweils breitwinklig emittierte Strahlung trifft anschliessend auf zwei im Senderblock integrierte, hintereinander angeordnete Blenden mit einer typischen Schlitzbreite von 1mm, wodurch die austretende Strahlung eine Strahlungsebene bildet. Die an einem beliebigen Punkt in der Strahlungsebene gemessene, vom Senderblock emittierte Strahlung stammt also nicht nur von einem Sendelement, sondern von bis zu n Sendelementen, wobei n bei einer Tastfeldlänge von 100mm vorzugsweise grössser als 30 und besonders bevorzugt grösser als 40 ist. Bei längeren Tastfeldlängen kann die Zahl der Sendeelemente entsprechend grösser sein. Ein an einem zweiten Rand des Überwachungsbereichs angeordneter erster Empfängerblock, der eine Empfangseinheit mit m Empfangselementen beinhaltet und sich im Wesentlichen parallel zum Senderblock erstreckt und diesem gegenüberliegt, erfasst die vom Senderblock ausgesandte Strahlung. Im Empfängerblock sind ebenfalls zwei hintereinander angeordnete Blenden mit einer typischen Schlitzbreite von 1mm integriert, die einen Teil der vom Senderblock emittierten Strahlung passieren lassen. Ein Empfangselement empfängt somit Strahlung von bis zu n Sendelementen. Die Zahl m der Empfangselemente ist bei einer Tastfeldlänge von 100mm vorzugsweise grösser als 20 und besonders bevorzugt grösser als 30. Bei längeren Tastfeldlängen kann die Zahl der Empfangselemente entsprechend grösser sein.

Vorzugsweise bildet ein Ausschnitt der Strahlungsebene das Tastfeld, in dem Objekte erfasst werden. Die Länge der Schlitze der Blenden in Sender- und Empfängerblock abzüglich zweimal einer festgelegten Distanz dₗ bestimmt die Länge des Tastfelds. Seine Höhe ist durch die Schlitzbreite der Blenden definiert, die Breite durch den Abstand des Empfängerblocks vom Senderblock abzüglich zweimal einer festgelegten Distanz d_{b}. Das Tastfeld wird dabei mittig angeordnet, im Abstand dₗ vom Tastfeld enden also die Blendenschlitze und im Abstand d_{b} beginnt der Sender- bzw. der Empfängerblock. dₗ und d_{b} können bei einer Länge der Blendenschlitze von 100mm beispielsweise 5mm betragen. Bei einem Abstand zwischen Sender- und Empfängerblock von 150mm resultiert damit ein Tastfeld der Länge 140mm und Breite 90mm. Die Blendenschlitzbreite und damit die Tastfeldhöhe sollten vorzugsweise gering sein, da durch die Tastfeldhöhe direkt das Auflösungsvermögen des Lichtvorhangs bestimmt wird. Üblicherweise beträgt die Höhe des Tastfelds zwischen 0.1mm und 3mm, typischerweise ungefähr 1mm.

Das Tastfeld muss möglichst homogen sein. Ein homogenes Tastfeld ist dadurch charakterisiert, dass die durch eine Kugel, die sich an beliebiger Position aber gleicher Höhe im Tastfeld befindet, verursachte Verminderung der vom Senderblock emittierten und vom Empfängerblock gemessenen Strahlung im Wesentlichen konstant ist. Ein im Wesentlichen homogenes Tastfeld wird durch mehrere Massnahmen erreicht: Durch geschickte Auswahl, Anordnung und Ausrichtung der Sende- und Empfangselemente und durch unterschiedliche Strahlungsstärken der Sendeelemente. In der Praxis gibt es jedoch Abweichungen vom Idealfall, weil beispielsweise die verwendeten Leuchtdioden Fertigungstoleranzen aufweisen, weil Ungenauigkeiten in der Mechanik und in der Montage der Sende- und Empfangseinheit auftreten und weil vorhandene Umgebungsstrahlung Einfluss nehmen kann. Eine Abweichung von bis zu ± 30%, vorzugsweise von bis zu ± 20% und besonders bevorzugt ± 10% von der über das ganze Tastfeld gemittelten Strahlungsintensität soll im Rahmen der vorliegenden Erfindung immer noch als hinreichend homogen gelten. Eine vorhandene Inhomogenität des Tastfelds verursacht eine entsprechende Streuung der Messungen, die tolerierbare Abweichung vom Idealfall ist abhängig von der Applikation.

Die Zahl der Sendeelemente und Empfangselemente muss keineswegs übereinstimmen. Alle Sendelemente werden vorzugsweise synchron betrieben, die Empfangseinheit fasst die Signale der Empfangselemente für die Auswertung zu einem einzigen Signal zusammen. Passiert ein Objekt das Tastfeld, dann wird das Tastfeld partiell unterbrochen und als Folge empfangen bis zu m Empfangselemente weniger Strahlung von den Sendeelementen der Sendeeinheit. Das von der Empfangseinheit gelieferte Signal ist schwächer.

Eine Kontrolleinheit resp. ein in der Kontrolleinheit abgespeichertes Programm (Software) registriert anhand der beim Passieren des Überwachungsbereichs bewirkten Veränderung der vom Empfängerblock registrierten Intensitäten der Strahlung ein Objekt. Die Kontrolleinheit kann eine oder mehrere Rechner umfassen, die lokal getrennt und über eine Datenverbindung miteinander verbunden sein können. Entsprechend kann auch das Erfassungs- und Auswerteprogramm auf mehrere Rechner verteilt sein.

Das Verfahren ist im Weiteren dadurch charakterisiert, dass eine Kontrolleinheit, die mit dem ersten Sender- und dem ersten Empfängerblock zwecks Steuerung derselben in Verbindung steht, aus der durch ein Objekt beim Passieren des Tastfelds bewirkten Veränderung der von den Empfangselementen des Empfängerblocks empfangenen Strahlung die auf den Empfängerblock projizierte Ausdehnung des Objekts zu verschiedenen Zeitpunkten, währenddem das Objekt das Tastfeld passiert, ermittelt. Aus der projizierten Ausdehnung kann nach dem Passieren des Objekts eine oder mehrere der nachfolgend erwähnten Grössen berechnet werden: Die Verweilzeit des Objekts, und/oder die maximale projizierte Ausdehnung und/oder die aufintegrierte projizierte Ausdehnung des Objekts. Die erfassten zu einem Objekt gehörenden zeitpunktabhängigen Ausdehnungen können zu einer aufintegrierten Ausdehnung zusammengesetzt werden. Die Berechnung der aufintegrierten Ausdehnung kann dabei bereits in der Kontrolleinheit, die einen Rechner umfasst und in der Vorrichtung integriert ist, oder in einem zweiten Rechner erfolgen, der über eine Datenverbindung mit dem Rechner der Kontrolleinheit in Verbindung steht. Dieses Verfahren hat zwei grosse Vorteile: Die Form eines das Tastfeld passierendes Objekt kann aufgezeichnet und visualisiert werden und es ist möglich, seine aufintegrierte Ausdehnung zu berechnen. Dies erlaubt es, Objekte unterschiedlicher Dimensionen und Formen auseinander zu halten und separat zu erfassen.

Während der Verweilzeit eines Objekts im Tastfeld kann eine Vielzahl von Messungen durchgeführt und die Signalstärke mit derjenigen bei freiem, d.h. nicht teilweise durch das Objekt bedecktem Tastfeld, verglichen werden. Vorzugsweise erfolgen die Messungen kontinuierlich und in möglichst kurzen Zeitabständen. Die Geschwindigkeit, mit der gemessen werden kann, ist primär durch die verwendete Hardware und die gewünschte Auflösung begrenzt. Üblicherweise dauert eine Messung zwischen 30 und 100 Mikrosekunden, Zur Auswertung kann über mehrere Messungen gemittelt werden, um die Signalqualität zu verbessern.

Die erfasste maximale Ausdehnung und die Verweilzeit eines Objekts hängen beide stark von der Orientierung des Objekts beim Passieren des Tastfelds ab. Bewegen sich aber mehrere gleiche Objekte zeitlich hintereinander derart durch das Tastfeld, dass sich die zu vermessende Fläche jeweils in einer beliebigen Ebene senkrecht zum Tastfeld und parallel zum Sender- und Empfängerblock aber ansonsten beliebig orientiert durch das Tastfeld bewegt, dann ist die ermittelte aufintegrierte Ausdehnung aller Objekte übereinstimmend. Dies ist der Fall, weil die Anordnung die auf den Empfängerblock projizierte Ausdehnung eines Objekts vermisst, die immer parallel zum Sender- und Empfängerblock im Raum liegt.

Die Ermittlung der aufintegrierten Ausdehnung eines Objekts stellt daher für das Vornehmen einer Klassifizierung eine sehr viel zuverlässigere Bezugsgrösse dar als die gemessene maximale Ausdehnung und die Verweilzeit des Objekts im Tastfelds.

Gleiche Objekte, die zu nahe aufeinanderfolgen, d.h. solche bei denen sich ihre Projektionen auf den Empfänger überlappen, können auseinandergehalten und als zwei Objekte erfasst werden.

Wird zusätzlich die zeitpunkt- bzw. ortsabhängige Ausdehnung des Objekts analysiert, dann steht ein zusätzliches Kriterium zur Klassifizierung zur Verfügung, welches auch die Form eines Objekts berücksichtigt.

Damit können in einem Arbeitsgang Objekte unterschiedlicher Dimensionen und Formen unterschieden werden. Entsprechend kann die Vorrichtung in Sortier- oder Zählprozessen eingesetzt werden. Beispielsweise können auf einem Förderband transportierte, unterschiedliche Objekte durch das eingesetzte Vermessungsverfahren zuverlässig auseinandergehalten werden.

Gemäss einer bevorzugten Verfahrensvariante werden die Sendeelemente gepulst. Dies hat den Vorteil, dass Störeinflüsse durch Fremdstrahlung eliminiert werden können. In einer Ausführungsvariante werden die Sendeelemente pro Messung einmal gepulst. Die Pulsweite kann symmetrisch oder asymmetrisch verteilt sein, d.h. die Phase, in der die Sendelemente Strahlung aussenden, muss nicht zwingend gleich lang sein wie die Phase in der sie inaktiv sind. Für den Fall, dass eine einzelne Messung insgesamt beispielsweise 30 Mikrosekunden benötigt, könnte die Phase, in der Sendeelemente Strahlung aussenden, 10 Mikrosekunden und somit die Phase, in der sie inaktiv sind, 20 Mikrosekunden dauern.

Zweckmässigerweise werden als Sendeelemente Leuchtdioden und als Empfangselemente photosensitive Elemente verwendet. Als Leuchtdioden werden vorzugsweise solche eingesetzt, die Licht im sichtbaren oder im Infrarot-Bereich ausstrahlen. Als photosensitive Elemente kommen solche in Frage, die bei den verwendeten Wellenlängen ansprechen.

Vorteilhaft sind Zählkanäle implementiert, denen die unterschiedlichen das Tastfeld passierenden Objekte aufgrund der beim Passieren des Tastfelds erfolgten Vermessung zugeordnet werden. Entsprechend kann das Verfahren zum Zählen von Objekten unterschiedlicher Dimensionen und Formen eingesetzt werden.

Zweckmässigerweise wird die aufintegrierte Ausdehnung eines Objekts in der Dimension Sekunden x Meter angegeben. Dies bietet sich dann an, wenn die Geschwindigkeit nicht bekannt ist, mit der die Objekte das Tastfeld passieren.

Soll die Ausdehnung eines Objekts unabhängig von der Geschwindigkeit, mit der es den Überwachungsbereich passiert, erfasst werden, dann können ein zweiter Senderblock und ein zweiter Empfängerblock in einem Abstand d vom ersten Senderblock und dem ersten Empfängerblock in der gleichen Flucht angeordnet werden, um zwei planparallele Tastfelder zu generieren. Dies ermöglicht es, bei bekanntem Abstand d den Einfluss der (als konstant angenommenen) Geschwindigkeit rechnerisch zu eliminieren. Damit lässt sich die Fläche des Objekts in m² berechnen. Die Strahlungsrichtung der beiden Tastfelder kann dabei gleichgerichtet oder beliebig anders sein.

Gemäss einer anderen Verfahrensvariante können ein zweiter Senderblock und ein zweiter Empfängerblock in einem Winkel, vorzugsweise senkrecht, zum ersten Sender- und Empfängerblock angeordnet werden, sodass die beiden den Überwachungsbereich bildenden Tastfelder sich in der gleichen Ebene befinden. Damit stehen mehr Informationen über das Objekt zur Verfügung und beispielsweise kann damit die Qualität einer Klassifikation verbessert werden.

Vorteilhaft wird ein kurzzeitiges Unterschreiten eines Schwellwertes s_{min_out} durch eine vordefinierbare Lückenunterdrückungszeit verhindert. Dadurch lassen sich Objekte, die beim Passieren des Tastfelds rotieren, d.h. durch die Rotation das Tastfeld kurzzeitig verlassen und wieder betreten, und auch Objekte mit dünnen oder (teil-) durchsichtigen Bereichen zuverlässig erfassen, weil ein kurzzeitiges Unterschreiten des Schwellwertes, der normalerweise anzeigt, dass das Objekt das Tastfeld verlassen hat, noch nicht als solches registriert wird.

Gegenstand der vorliegenden Erfindung ist auch eine Vorrichtung zum Erfassen und Vermessen von Objekten beim Passieren eines Überwachungsbereichs. Diese hat an einem ersten Rand eines Überwachungsbereichs einen ersten Senderblock mit einer Sendeeinheit, die n Sendeelemente enthält, angeordnet, der den Überwachungsbereich im Wesentlichen flächendeckend mit vorzugsweise elektromagnetischer Strahlung beaufschlagen kann. An einem zweiten Rand des Überwachungsbereichs ist dem ersten Senderblock gegenüberliegend ein erster Empfängerblock mit einer Empfangseinheit, die m Empfangselemente enthält, angeordnet, welche zur Registrierung der von den n Sendeelementen des ersten Senderblocks ausgesandten Strahlung ausgelegt sind. Sender- und Empfängerblock erzeugen so gemäss dem vorab beschriebenen Verfahren ein im Wesentlichen homogenes Tastfeld. Eine Kontrolleinheit steht mit dem ersten Sender- und dem ersten Empfängerblock zwecks Steuerung derselben in Verbindung und ist dazu ausgelegt, aus der durch ein Objekt beim Passieren des Tastfelds bewirkten Veränderung der von den Empfangselementen der Empfangseinheit empfangenen Strahlung die projizierte Ausdehnung zu verschiedenen Zeitpunkten, währenddem das Objekt das Tastfeld passiert, zu ermitteln. Daraus kann nach dem Passieren - je nach Anforderung - die Verweilzeit des Objekts, die maximale projizierte Ausdehnung und/oder die aufintegrierte projizierte Ausdehnung des Objekts berechnet werden. Die erfassten zu einem Objekt gehörenden zeitpunktabhängigen projizierten Ausdehnungen können zusätzlich zur Ermittlung der Form des Objekts verwendet werden. Diese Vorrichtung hat den Vorteil, dass sie die Verweilzeit des Objekts, die projizierte Ausdehnung, die aufintegrierte Ausdehnung und/oder Form von Objekten zuverlässig erfassen vermag. Die erfassten Daten der das Tastfeld passierenden Objekte können zur Klassifizierung, zur Visualisierung und zu anderweitiger Weiterverarbeitung verwendet werden. Vorzugsweise sind die Sendeelemente und Empfangselemente so selektiert, angeordnet und/oder ausgerichtet, und /oder werden so betrieben, dass die durch eine Kugel, die sich an beliebiger Position aber gleicher Höhe im Tastfeld befindet, verursachte Verminderung der vom Senderblock emittierten und vom Empfängerblock gemessenen Strahlung im Wesentlichen konstant ist, je ausgeglichener das Tastfeld ist, umso geringer ist die Streuung der Ergebnisse. Dies hat den Vorteil, dass aufgrund des im Wesentlichen homogenen flächigen Tastfelds die Auflösung der erfindungsgemässen Vorrichtung nicht durch die Anzahl bzw. den Abstand der Sendeelemente untereinander und die Anzahl bzw. den Abstand der Empfangselemente voneinander bestimmt ist, sondern wesentlich höher sein kann.

Zweckmässigerweise sind im Senderblock zwischen den Sendelementen und dem Strahlungsaustritt zwei Blenden vorgesehen. Dadurch ist es möglich, die Höhe des Tastfelds zu begrenzen und damit die Auflösung hoch zu halten.

Gemäß der Erfindung sind auch im Empfängerblock zwischen dem Strahlungseintritt und den Empfangselementen zwei Blenden vorgesehen. Damit kann Streulicht ausgeschlossen und die Auflösung verbessert werden.

Gemäss einer bevorzugten Ausführungsform sind die Empfangselemente in Serieschaltung miteinander verbunden. Eine Serieschaltung lässt sich kostengünstig realisieren.

Die Sende- und Empfangselemente sind so ausgewählt und angeordnet, dass die von einem Sendeelement emittierte Strahlung von bis zu m Empfangselementen empfangen wird und die von einem Empfangselement empfangene Strahlung von bis zu n Sendeelementen stammt.

Gemäß der Erfindung weist die Sendeeinheit eine Vielzahl von Sendeelementen und die Empfangseinheit eine Vielzahl von Empfangselementen auf, wobei die Zahl der Sendeelemente und Empfangselemente keineswegs übereinstimmen muss. Die Verwendung einer grossen Zahl von Sendeelementen hat den Vorteil, dass damit ein ausgeglicheneres, d.h. homogeneres Tastfeld erzeugt werden kann.

Als Sendeelemente werden vorzugsweise Leuchtdioden und als Empfangselemente lichtempfindliche Elemente eingesetzt. Die verwendeten Leuchtdioden können elektromagnetische Strahlung in einem Wellenlängenbereich zwischen 300 und 900 nm aussenden.

Vorteilhaft ist die Kontrolleinheit dafür ausgelegt, um die Sendeelemente zu pulsen oder zu modulieren. Beim Pulsen werden alle oder auch nur einzelne Sendeelemente gleichzeitig aktiviert und deaktiviert und vorzugsweise jenes Signal, das unmittelbar vor dem nächsten Strahlungsimpuls registriert ist, als Referenz zwischengespeichert. Zweckmässigerweise ist die Kontrolleinheit ausgebildet, um periodisch aus der von einem Teil der Empfangselemente erfassten Abnahme der Strahlungsintensität während der Verweilzeit eines Objekts im Tastfeld die projizierte Ausdehnung desselben zu berechnen. Aus der Abnahme der insgesamt registrierten Signalstärke bei der teilweisen Bedeckung des Tastfeldes durch ein Objekt im Vergleich zur registrierten Signalstärke bei freiem Tastfeld kann die Beschattung der Empfangselemente und daraus die projizierte Ausdehnung des Objekts festgestellt werden.

Vorteilhaft weist die Kontrolleinheit resp. das in der Kontrolleinheit gespeicherte Programm (Software) zur Steuerung der Kontrolleinheit mehrere parametrisierbare Zählkanäle auf. Die Parameter des Zählkanals bestimmen, welche Objekte ihm zugeordnet und in Summe erfasst werden.

Vorzugsweise kann ein Zählkanal Funktionen auslösen, z.B. beim Erreichen einer Sollmenge. Dazu wird beispielsweise ein entsprechendes Signal an einem Ausgang der Vorrichtung angelegt.

Gemäss einer vorteilhaften Ausführungsform B sind ein zweiter Senderblock und ein zweiter Empfängerblock vorgesehen, die ein zweites Tastfeld definieren. Diese beiden den Überwachungsbereich bildenden Tastfelder befinden sich in der gleichen Ebene. Dabei können die Strahlungsrichtungen der beiden Tastfelder in einem beliebigen vorzugsweise rechten Winkel zueinander sein. Die gleichzeitige Verwendung von zwei Tastfeldern hat den Vorteil, dass mehr Informationen über das Objekt zur Verfügung stehen. Damit kann beispielsweise die Qualität einer Klassifikation verbessert werden. Eine gegenseitige Beeinflussung der beiden Tastfelder kann beispielsweise durch optische Massnahmen oder durch getrennte Wellenlängenbereiche verhindert werden.

Eine andere bevorzugte Ausführungsform C sieht vor, dass das erste und das zweite Tastfeld in einem Abstand d voneinander in planparallelen Ebenen angeordnet sind. Dabei können die Strahlungsrichtungen der beiden Tastfelder gleichgerichtet oder in einem beliebigen Winkel sein. Eine solche Anordnung hat den Vorteil, dass die erfasste Verweildauer eines passierenden Objekts in Sekunden in eine Ausdehnung in der Masseinheit Meter umgerechnet werden kann.

Eine andere bevorzugte Ausführungsform D ist eine Kombination der Ausführungsformen B und C. Das erste und das zweite Tastfeld befinden sich vorzugsweise in der gleichen Ebene. Dabei können die Strahlungsrichtungen der beiden Tastfelder in einem beliebigen vorzugsweise rechten Winkel zueinander sein. Das dritte Tastfeld ist planparallel in einem Abstand d von den anderen beiden Tastfeldern angeordnet.

Vorteilhaft werden das Verfahren und die Vorrichtung zum Klassifizieren von den Überwachungsbereich passierenden Objekten anhand unterschiedlicher Verweilzeiten, projizierter Ausdehnungen, aufintegrierter projizierter Ausdehnungen und/oder projizierter Formen verwendet.

Ausführungsbeispiele der Erfindung werden unter Bezugnahme auf die nachfolgenden Figuren näher im Detail beschrieben.

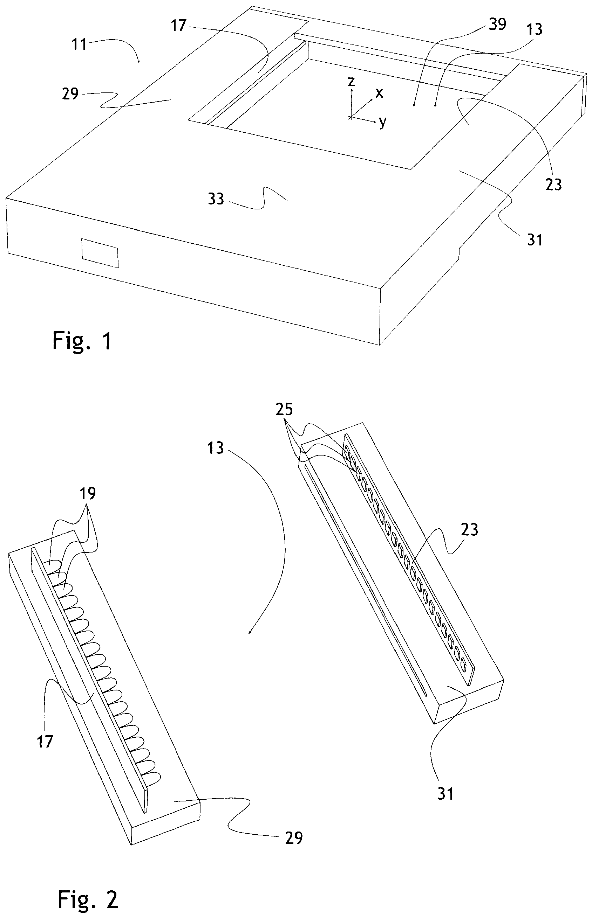

- Figur 1: Zeigt in perspektivischer Ansicht den prinzipiellen Aufbau einer Vorrichtung zum Erfassen und Zählen von Objekten in Gestalt eines Rahmen-Lichtvorhangs.
- Figur 2:: Zeigt in perspektivischer Ansicht eine Sendeeinheit und eine Empfangseinheit mit schematischem internen Aufbau.

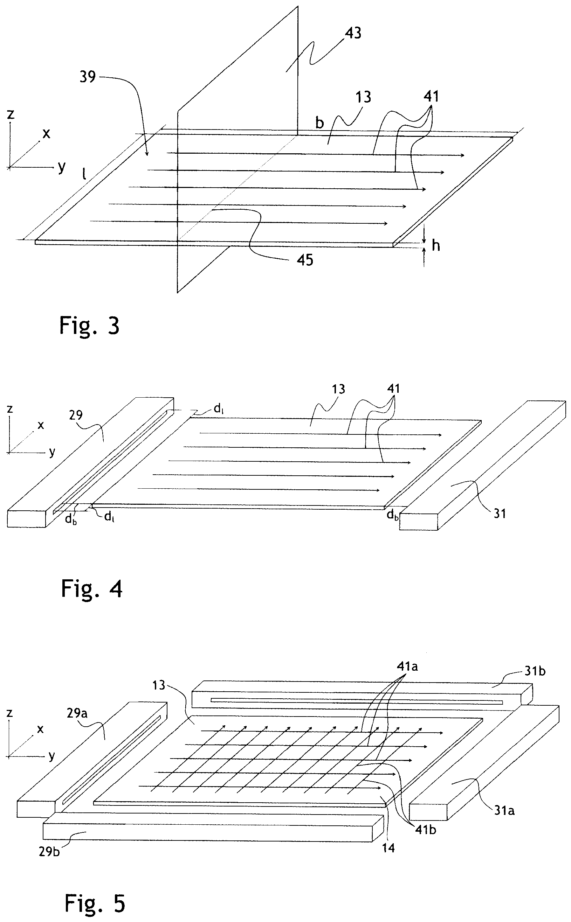

- Figur 3:: Zeigt beispielhaft ein Tastfeld der Länge l, der Breite b und der Höhe h, wobei die einzelnen Pfeile im Tastfeld lediglich die Strahlungsrichtung symbolisieren. Tatsächlich strahlt jedes Sendelement breitwinklig.
- Figur 4:: Zeigt schematisch eine erste Ausführungsform A einer erfindungsgemässen Vorrichtung. Schematisch gezeigt ist das sich in x- und y-Richtung erstreckende Tastfeld der Vorrichtung von Fig. 1. Die einzelnen Pfeile im Tastfeld symbolisieren die vom Senderblock emittierte Strahlung, die vom Empfängerblock empfangen wird.
- Figur 5:: Zeigt schematisch eine zweite Ausführungsform B einer erfindungsgemässen Vorrichtung mit zwei senkrecht zueinander orientierten in gleicher Ebene angeordneten Tastfeldern. Die einzelnen in den beiden Tastfeldern gezeichneten Pfeile symbolisieren die von den Senderblöcken emittierte Strahlung, die von den zugeordneten Empfängerblöcken empfangen wird.

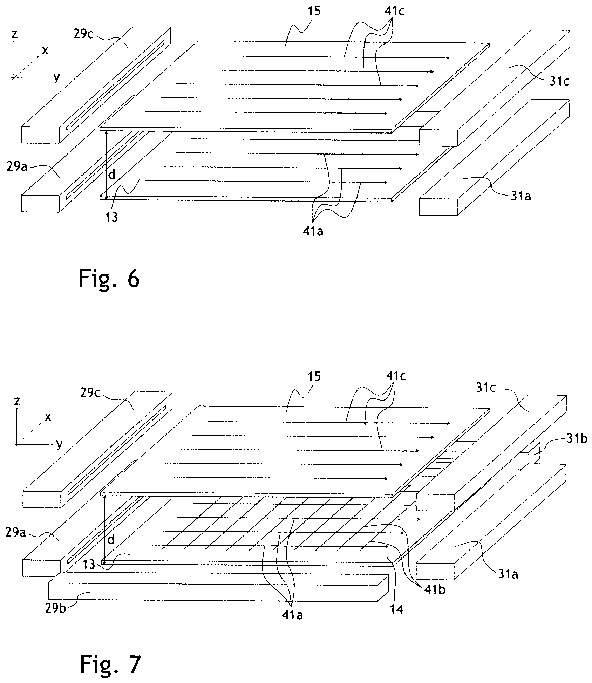

- Figur 6:: Zeigt eine dritte Ausführungsform C der Erfindung mit zwei im Abstand d angeordneten planparallelen und sich in x-Richtung erstreckenden Tastfeldern. Die einzelnen in den beiden Tastfeldern gezeichneten Pfeile symbolisieren die von den Senderblöcken emittierte Strahlung, die von den zugeordneten Empfängerblöcken empfangen wird.
- Figur 7:: Zeigt eine vierte Ausführungsform D der Erfindung bestehend aus insgesamt drei Tastfeldern, nämlich zwei senkrecht zueinander orientierten in gleicher Ebene angeordneten Tastfeldern und einem im Abstand d dazu angeordneten dritten Tastfeld. Die einzelnen in den Tastfeldern gezeichneten Pfeile symbolisieren die von den Senderblöcken emittierte Strahlung, die von den zugeordneten Empfängerblöcken empfangen wird.

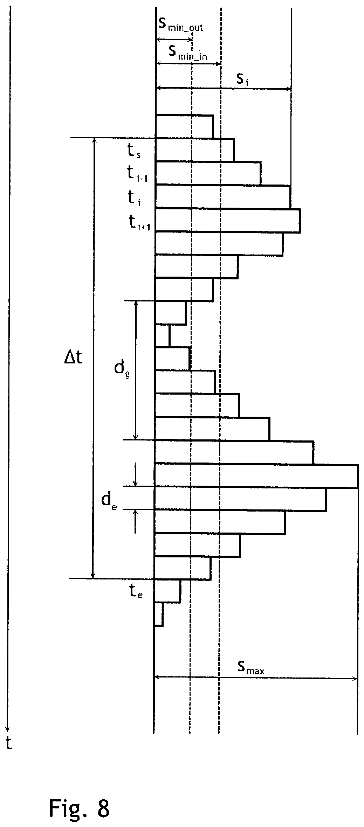

- Figur 8:: Zeigt die verschiedenen Parameter, die bei der Bestimmung der maximalen Ausdehnung des Objekts, dessen Verweilszeit und der aufintegrierten Ausdehnung eine Rolle spielen.

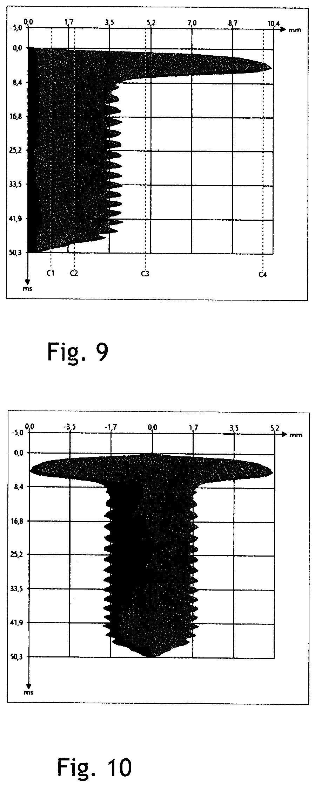

- Figur 9:: Zeigt beispielhaft die Visualisierung der Form einer Schraube, die das Tastfeld passiert hat, wobei die von einer Empfangseinheit registrierte Strahlung durch eine Software im Lichtvorhang ausgewertet und durch eine externe Software visualisiert wird. Die erfasste zeitabhängige Ausdehnung ist linksbündig dargestellt.
- Figur 10:: Zeigt beispielhaft die Visualisierung der Form einer Schraube, die das Tastfeld passiert hat, wobei die von einer Empfangseinheit registrierte Strahlung durch eine Software im Lichtvorhang ausgewertet und durch eine externe Software visualisiert wird. Die erfasste zeitabhängige Ausdehnung ist zentriert dargestellt.

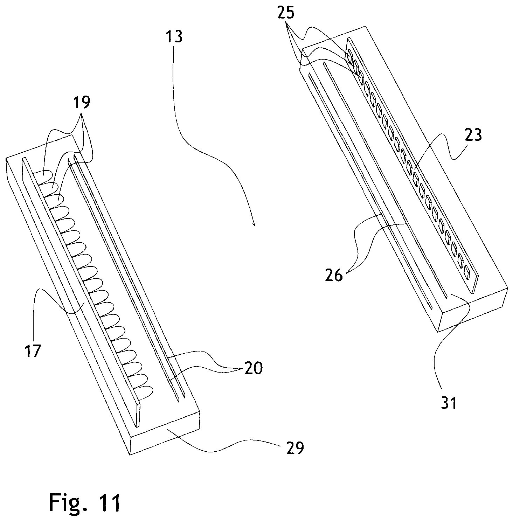

- Figur 11:: Zeigt in perspektivischer Ansicht eine Sendeeinheit und eine Empfangseinheit mit schematischem internen Aufbau. Gezeigt sind die Blenden im Sender- und Empfängerblock.

Gemäss Ausführungsbeispiel hat die in Figur 1 dargestellte Vorrichtung 11 zum Erfassen, Zählen und Klassifizieren von Objekten, die einen Überwachungsbereich 39 passieren, die Gestalt eines Rahmen-Lichtvorhangs mit zwei parallel einander gegenüberliegenden Schenkeln, dem Senderblock 29 und dem Empfängerblock 31. Im Senderblock 29 befindet sich eine Sendeeinheit 17 und im Empfängerblock 31 eine Empfangseinheit 23. Von der Sendeeinheit 17 ausgesendete Strahlung wird von der Empfangseinheit 23 erfasst. Der Sender- und der Empfängerblock 29, 31 sind an eine Kontrolleinheit 33 angeschlossen. Die Kontrolleinheit 33 verfügt über einen Mikroprozessor und mindestens einen Speicher, in dem ein Programm zur Steuerung von Sender- und Empfängerblock 29, 31 und zur Auswertung abgelegt ist. Zwischen den in einem Abstand voneinander angeordneten Sender- und Empfängerblöcken 29, 31 befindet sich der durch ein im Wesentlichen homogenes Tastfeld 13 gebildete Überwachungsbereich 39. Der Senderblock 29 und der Empfängerblock 31 sind auf gleicher Position in Richtung der x-Achse zueinander parallel und in der gleichen Ebene (gleiche Position in Richtung der z-Achse) ausgerichtet.

Figur 2 zeigt schematisch einen möglichen internen Aufbau eines Senderblocks 29 mit der Sendeeinheit 17, die mit einer Mehrzahl von Sendeelementen 19 (üblicherweise Leuchtdioden) ausgestattet ist, und eines Empfängerblocks 31 mit der Empfangseinheit 23, die mit einer Mehrzahl von strahlungsempfindlichen Empfangselementen 25 (üblicherweise Photodioden) bestückt ist. Sender- und Empfängerblock 29, 31 sind jeweils mit zwei Blenden 20, 26 (siehe Ausführungsbeispiel gemäss Figur 11) mit Schlitzlänge 1 (siehe Figur 3) ausgestattet, welche die von den Sendeelementen 19 breitwinklig ausgesendete Strahlung beschneiden, sodass sich das homogene ebene Tastfeld 13 mit der Höhe h (siehe Figur 3) ausbildet.

Figur 3 zeigt den Überwachungsbereich 39, der durch ein von Senderblock 29 und Empfängerblock 31 erzeugtes Tastfeld 13 gebildet wird. Das Tastfeld erstreckt sich in x-Richtung auf der Länge l, die durch die Länge des Schlitzes der Blenden 20 bzw. 29 im Sender- 29 bzw. Empfängerblock 31 abzüglich zweimal der Distanz dₗ (siehe Figur 4) vorgegeben ist. Seine Höhe h ist durch die Schlitzbreite der Blenden 20, 26 (siehe Figur 11) definiert, die Breite b durch den Abstand des Empfängerblocks vom Senderblock abzüglich zweimal der Distanz d_{b} (siehe Figur 4). Die einzelnen Pfeile 41 im Tastfeld 13 symbolisieren die Richtung der vom Senderblock 29 ausgesendeten Strahlung. Tatsächlich strahlt jedes Sendelement 19 breitwinklig.

Bewegen sich mehrere gleiche Objekte derart durch das Tastfeld, dass sich ihre zu vermessende Fläche in einer Objektbewegungsebene 43 bewegt, für die gilt, dass ihre y-Position im Raum konstant ist (d.h. sie steht senkrecht zur Tastfeldebene und die durch den Schnitt der beiden Ebenen gebildete Objektbewegungsgerade 45 ist parallel zur x-Achse), dann ist die ermittelte Fläche aller Objekte übereinstimmend, unabhängig von der sonstigen Orientierung der Objekte.

Fig. 4 zeigt eine erste Ausführungsform A einer Sensoranordnung bestehend aus einem Senderblock 29 und einem Empfängerblock 31, die zusammen den aus dem Tastfeld 13 bestehenden Überwachungsbereich 39 bilden. Die einzelnen Pfeile 41 im Tastfeld 13 symbolisieren die vom Senderblock emittierte Strahlung, die vom Empfängerblock empfangen wird.

Fig. 5 zeigt eine zweite Ausführungsform B einer Sensoranordnung, die einen Überwachungsbereich 39 aufweist, der aus zwei Tastfeldern 13 und 14 besteht, die in einer gemeinsamen Ebene liegen. Die Sender- Empfängerblockpaare 29a/31a sowie 29b/31b sind zueinander senkrecht angeordnet. Die einzelnen in den beiden Tastfeldern gezeichneten Pfeile 41a und 41b symbolisieren die von den Senderblöcken 29a und 29b emittierte Strahlung, die von den zugeordneten Empfängerblöcken 31a und 31b empfangen wird.

Fig. 6 zeigt eine dritte Ausführungsform C einer Erfassungsvorrichtung mit einen Überwachungsbereich 39 bestehend aus zwei in einem Abstand d voneinander angeordneten planparallelen Tastfeldern 13 und 15, in denen die Sender- und Empfangsblöcke jeweils übereinander angeordnet sind. Eine solche Tastfeldanordnung eignet sich insbesondere dafür, die projizierte Fläche von Objekten unabhängig von der Geschwindigkeit zu erfassen. Die einzelnen in den beiden Tastfeldern 13 und 15 gezeichneten Pfeile 41a und 41c symbolisieren die von den Senderblöcken 29a und 29c emittierte Strahlung, die von den zugeordneten Empfängerblöcken 31a und 31c empfangen wird.

Die vierte Ausführungsform D, dargestellt in Fig. 7, ist eine Kombination der Ausführungsformen B und C gemäss den Figuren 5 und 6. Der Überwachungsbereich 39 weist insgesamt drei Tastfelder 13,14 und 15 auf. Die Tastfelder 13 und 14 liegen in einer gemeinsamen Ebene, das Tastfeld 15 in einem Abstand d planparallel zu den Tastfeldern 13 und 14. Die einzelnen in den Tastfeldern gezeichneten Pfeile 41a, 41b und 41c symbolisieren die von den Senderblöcken 29a, 29b und 29c emittierte Strahlung, die von den zugeordneten Empfängerblöcken 31a, 31b und 31c empfangen wird.

Die Vorrichtung gemäss der Erfindung funktioniert wie folgt: Die im Senderblock 29 erzeugte Strahlung trifft im Empfängerblock 31 auf die Empfangselemente 25 auf, von denen jedes proportional zur auftreffenden Strahlungsmenge ein analoges Signal erzeugt. Das Signal aller Empfangselemente 25 wird aufsummiert und einem Analog/Digital-Wandler in der Kontrolleinheit zugeführt. Dort wird das analoge Empfangssignal digitalisiert.

Die Kontrolleinheit ermittelt bei freiem Tastfeld pro Zeiteinheit dₑ (beispielsweise 30µs) zum Zeitpunkt tᵢ die Strahlungsmenge mᵢ, die von der Sendeeinheit gesendet und von der Empfangseinheit empfangen wurde (Fig. 8). Die Kontrolleinheit legt den Wert in einem internen Speicher als Referenzstrahlungsmenge m_{ref} ab. Die Referenzstrahlungsmenge m_{ref} entspricht dem Zustand, wenn sich kein Objekt im Tastfeld befindet. Dringt nun ein Objekt ins Tastfeld ein, dann wird dieses in dem Bereich, in dem sich das Objekt befindet, anteilig unterbrochen und die von der Empfangseinheit zum Zeitpunkt tᵢ empfangene Strahlungsmenge m; ist somit geringer als m_{ref}. Bei bekannter Länge l des Tastfelds in Richtung x lässt sich anhand des Verhältnisses von mᵢ zu m_{ref} die Ausdehnung sᵢ des Objekts zum Zeitpunkt tᵢ ermitteln.

Anhand der vom Anwender vorgegebenen Minimalausdehnung sₘᵢₙ ermittelt die Kontrolleinheit den Zeitpunkt tₛ, bei welchem das Objekt in das Tastfeld eindringt: Das Objekt gilt als zum Zeitpunkt tₛ ins Tastfeld eingedrungen, wenn die zu diesem Zeitpunkt ermittelte Ausdehnung s, eine von sₘᵢₙ abgeleitete Ausdehnung S_{min_in} zum ersten Mal überschritten hat.

Anhand der vorgegebenen Minimalausdehnung sₘᵢₙ ermittelt die Kontrolleinheit den Zeitpunkt tₑ, bei welchem das Objekt das Tastfeld verlassen hat: Das Objekt gilt als zum Zeitpunkt tₑ das Tastfeld verlassen zu haben, wenn die zu diesem Zeitpunkt ermittelte Ausdehnung sₑ eine von sₘᵢₙ abgeleitete Ausdehnung s_{min_out} unterschritten hat und optional wenn während der vorgegebenen Lückenunterdrückungszeit d_{g} die Ausdehnung Sₘᵢₙ_ᵢₙ nicht wieder überschritten wurde.

Die maximale Ausdehnung sₘₐₓ des Objekts entspricht dem maximalen Wert sᵢ der im Zeitraum t, bis te liegt.

Die Dauer Δt, während der das Objekt das Tastfeld mindestens teilweise bedeckt, ist die Differenz tₑ-tₛ.

Durch Integration aller Werte sᵢ, die im Zeitraum tₛ bis tₑ liegen, kann die aufintegrierte Ausdehnung a des Objekts in der Masseinheit Sekunden x Meter ermittelt werden.

Ist die Geschwindigkeit bekannt, mit der ein Objekt das Tastfeld passiert, dann lässt sich über die aufintegrierte Ausdehnung a des Objekts in der Masseinheit Sekunden x Meter die Fläche in der Masseinheit m² berechnen, da sich anhand der Geschwindigkeit die Masseinheit Sekunden in die Masseinheit Meter umrechnen lässt. Die Geschwindigkeit kann entweder gemessen oder durch den Anwender vorgegeben werden. In den Ausführungsformen C und D gemäss den Figuren 6 und 7 lässt sich unter der Annahme, dass die Geschwindigkeit konstant ist, mit der ein Objekt die beiden Tastfelder passiert, aus dem gegebenen Abstand d der beiden Tastfelder in Richtung z und der Differenz der beiden Zeitpunkte, wenn das Objekt jeweils die beiden Tastfelder betritt, die Ausdehnung des Objekts in Richtung z berechnen. Somit kann die Fläche in der Masseinheit m² ohne Vorgabe der Geschwindigkeit berechnet werden.

Anhand eines oder mehrerer der Kriterien maximale Ausdehnung sₘₐₓ, Verweilzeit Δt, aufintegrierte Ausdehnung a bzw. Fläche und/ oder Form des Objekts kann eine Klassifizierung und somit eine Zuordnung zu einem Zählkanal vornehmen.

Wird die Ausdehnung s, im Zeitraum tₛ bis tₑ aufgezeichnet, dann kann diese für weiterführende Analysezwecke im Lichtvorhang oder in einer externen Einheit herangezogen werden, z.B. um die Objektklassifizierung zu optimieren.

Figur 11 zeigt wie Figur 2 schematisch einen möglichen internen Aufbau eines Senderblocks 29 und eines Empfängerblocks 31. Sender- und Empfängerblock 29, 31 sind jeweils mit zwei Blenden 20, 26 ausgestattet, welche die von den Sendeelementen breitwinklig ausgesendete Strahlung beschneiden, sodass sich das homogene ebene Tastfeld 13 ausbildet.

Abhängig von der Aufgabenstellung kann die Erfindung auch als robuster und kostengünstiger Ersatz für ein Kamerasystem dienen, das beispielsweise zur Objekterkennung oder Objektklassifizierung eingesetzt wird.

Zur Verbesserung der Störunempfindlichkeit kann die Kontrolleinheit mittels konfigurierbarem Oversampling allfälliges Rauschen unterdrücken: Das Gerät mittelt die pro Zeiteinheit tₑ ermittelte Strahlungsmenge mt über einen vorgegebenen Zeitraum. Dadurch arbeitet das Gerät langsamer und das zeitliche Auflösungsvermögen wird verringert, die Signalqualität wird aber verbessert.

Das oben beschriebene Ausführungsbeispiel ist nicht als limitierend zu betrachten. Insbesondere ist die vorliegende Erfindung nicht auf eine Gabelanordnung beschränkt. Die Sender- und Empfängerblöcke können getrennt voneinander sein, d.h. sie müssen nicht über einen Verbindungsbalken miteinander verbunden sein. Die Kommunikation zwischen der Kontrolleinheit und den Sender- und Empfangsblöcken kann in diesem Fall über ein Kabel oder über Funk erfolgen. Als Messstrahlung kann neben Licht prinzipiell jegliche Form von Strahlung zum Einsatz kommen.

In einem Ausführungsbeispiel mit einem Tastfeld der Länge 100mm, Breite 100mm und Höhe 1mm, gebildet aus einem Senderblock mit 32 Sendeelementen im Abstand von 3.5mm und einem Empfängerblock mit 28 Empfängselementen im Abstand von 4mm, lässt sich eine Auflösung unter 0.3mm erreichen.

Die Erfindung betrifft ein Verfahren und eine Vorrichtung zum Erfassen und Vermessen von Objekten beim Passieren eines durch ein oder mehrere Tastfelder 13 definierten Überwachungsbereichs 39. Ein Tastfeld wird durch einen Senderblock 29 und einem gegenüber angeordneten Empfängerblock 31 erzeugt. Ein Senderblock enthält eine Mehrzahl Sendeelemente 19 die Strahlung emittieren. Ein Empfängerblock enthält eine Mehrzahl Empfangselemente 25, die Strahlung messen. Ein Tastfeld ist eine im Wesentlichen homogene Strahlungsebene. Die Strahlung eines Sendeelements trifft auf eine Mehrzahl Empfangselemente, ein Empfangselement empfängt Strahlung von einer Mehrzahl Sendeelemente. Die von den Empfangselementen gemessene Strahlung wird im Empfängerblock zu einem Signal zusammengefasst. Die so erreichbare Auflösung ist wesentlich feiner als das durch die örtliche Anordnung der Sende- oder Empfangselemente vorgegebene Raster. Während der Verweilzeit eines Objekts im Tastfeld wird eine Vielzahl von Einzelmessungen ausgeführt und die Beschattung der Empfangselemente durch Vergleich der Signalstärken bei bedecktem und nicht bedecktem Tastfeld festgestellt und daraus die projizierte Ausdehnung des Objekts berechnet. Durch Aneinanderreihen der einzelnen, zeitlich nacheinander ausgeführten Messungen kann die Verweilzeit des Objekts im Tastfeld, die maximale projizierte Ausdehnung, die aufintegrierte projizierte Ausdehnung und die projizierte Form des Objekts ermittelt werden. Anhand der über ein Objekt gesammelten Daten kann es klassifiziert, gezählt und seine Form visualisiert werden.

### Legende

- 11: Vorrichtung
- 13,14,15: Tastfelder
- 17: Sendeeinheit
- 19: Sendeelemente
- 20: Blenden im Senderblock
- 23: Empfangseinheit
- 25: Empfangselemente
- 26: Blenden im Empfängerblock
- 29, 29a bis 29c: Senderblöcke
- 31, 31a bis 31c: Empfängerblöcke
- 33: Kontrolleinheit
- 39: Überwachungsbereich
- 41, 41a bis 41c: symbolische Darstellung der Strahlungsrichtung der Tastfelder
- 43: Objektbewegungsebene
- 45: Objektbewegungsgerade

## Patentansprüche

1. Verfahren zum Erfassen und Vermessen von Objekten beim Passieren eines Überwachungsbereichs (39), bei welchem Verfahren
- ein an einem ersten Rand des Überwachungsbereichs (39) angeordneter erster Senderblock (29) zur flächigen Aussendung von vorzugsweise elektromagnetischer Strahlung, der eine Sendeeinheit (17) beinhaltet, die eine Mehrzahl von Sendeelementen (19) aufweist, und
- ein an einem dem ersten Rand gegenüberliegenden zweiten Rand des Überwachungsbereichs (39) angeordneter erster Empfängerblock (31), der eine Empfangseinheit (23) mit einer Mehrzahl Empfangselemente (25) beinhaltet, der vom Senderblock (29) ausgesandte Strahlung erfasst, wobei
- der erste Senderblock (29) und der erste Empfängerblock (31) ein im Wesentlichen homogenes flächiges erstes Tastfeld (13) erzeugen, das den Überwachungsbereich bildet, und
eine Kontrolleinheit (33), die mit dem ersten Sender- und dem ersten Empfängerblock zwecks Steuerung derselben in Verbindung steht,
wobei die von einem Sendeelement emittierte Strahlung von einer Mehrzahl Empfangselemente empfangen wird und dass die von einem Empfangselement empfangene Strahlung von einer Mehrzahl Sendeelemente emittiert wurde und die Kontrolleinheit (33) aus der durch ein Objekt beim Passieren des Tastfelds (13) bewirkten Veränderung der von den Empfangselementen (25) der Empfangseinheit (23) insgesamt empfangenen Strahlung die projizierte Ausdehnung zu verschiedenen Zeitpunkten, währenddem das Objekt das Tastfeld (13) passiert, ermittelt
**dadurch gekennzeichnet,**
**dass** alle Sendeelemente (19) synchron betrieben werden und
im Senderblock zwischen den Sendelementen und dem Strahlungsaustritt sowie im Empfängerblock zwischen dem Strahlungseintritt und den Empfangselementen je zwei Schlitzblenden (20, 26) vorgesehen sind, mit dem Zweck, dass ein flächiges Tastfelds gebildet wird.

2. Verfahren nach Anspruch 1, **dadurch gekennzeichnet, dass** die Sendeelemente und Empfangselemente so selektiert, angeordnet, ausgerichtet und /oder betrieben werden, dass die durch eine Kugel, die sich an beliebiger Position aber gleicher Höhe im Tastfeld (13) befindet, verursachte Verminderung der vom Senderblock emittierten und vom Empfängerblock gemessenen Strahlung im Wesentlichen konstant ist.

3. Verfahren nach einem der Ansprüche 1 oder 2, **dadurch gekennzeichnet, dass** nach dem Passieren des Objekts aus der zu verschiedenen Zeitpunkten erfassten projizierten Ausdehnung des Objekts seine Verweilzeit im Tastfeld, seine auf die Empfangseinheit (23) projizierte maximale Ausdehnung, seine projizierte Fläche und/oder seine anhand der zeitpunktsabhängigen Ausdehnung eruierte projizierte Form berechnet und diese Daten zur allfälligen Visualisierung zur Verfügung gestellt werden.

4. Verfahren nach einem der Ansprüche 1 bis 3, **dadurch gekennzeichnet, dass** der Überwachungsbereich durch mehrere Tastfelder (13 bis 15) bzw. Sender/Empfängerblockpaare (29a bis 29c, 31a bis 31c) gebildet wird, die gleichgerichtet oder in einem Winkel, vorzugsweise senkrecht zueinander und in der gleichen Ebene oder in einem Abstand voneinander angeordnet sind, mit dem Ziel, dass mehr Informationen über passierende Objekte gewonnen werden können.

5. Verfahren nach einem der Ansprüche 1 bis 4, **dadurch gekennzeichnet, dass** ein kurzzeitiges Unterschreiten eines Schwellwertes durch eine vordefinierbare Lückenunterdrückungszeit verhindert, dass ein Objekt als "das Tastfeld verlassen habend" detektiert wird, obwohl dies noch nicht der Fall ist.

6. Vorrichtung zum Erfassen und Vermessen von Objekten beim Passieren eines Überwachungsbereichs, mit
- einem an einem ersten Rand des Überwachungsbereichs (39) angeordneten erster Senderblock (29) zur flächigen Aussendung von vorzugsweise elektromagnetischer Strahlung, der eine Sendeeinheit (17) beinhaltet, die eine Mehrzahl von Sendeelementen (19) aufweist, und
- einem an einem dem ersten Rand gegenüberliegenden zweiten Rand des Überwachungsbereichs (39) angeordneten erster Empfängerblock (31), der eine Empfangseinheit (23) mit einer Mehrzahl Empfangselemente (25) beinhaltet, der vom Senderblock (29) ausgesandte Strahlung erfasst, wobei
- der erste Senderblock (29) und der erste Empfängerblock (31) im Wesentlichen ein homogenes flächiges erstes Tastfeld (13) erzeugen, das den Überwachungsbereich bildet, und
einer Kontrolleinheit (33), die mit dem ersten Sender- und dem ersten Empfängerblock zwecks Steuerung derselben in Verbindung steht,
wobei die von einem Sendeelement emittierte Strahlung von einer Mehrzahl Empfangselemente empfangen wird und dass die von einem Empfangselement empfangene Strahlung von einer Mehrzahl Sendeelemente emittiert wurde und die Kontrolleinheit (33) aus der durch ein Objekt beim Passieren des Tastfelds (13) bewirkten Veränderung der von den Empfangselementen (25) der Empfangseinheit (23) insgesamt empfangenen Strahlung die projizierte Ausdehnung zu verschiedenen Zeitpunkten, währenddem das Objekt das Tastfeld (13) passiert, ermittelt
**dadurch gekennzeichnet,**
**dass** alle Sendeelemente (19) synchron betrieben werden und im Senderblock zwischen den Sendelementen und dem Strahlungsaustritt sowie im Empfängerblock zwischen dem Strahlungseintritt und den Empfangselementen je zwei Schlitzblenden (20, 26) vorgesehen sind, mit dem Zweck, dass ein flächiges Tastfelds gebildet wird.

7. Vorrichtung nach Anspruch 6, **dadurch gekennzeichnet, dass** die Sendeelemente und Empfangselemente so selektiert, angeordnet, ausgerichtet und /oder betrieben werden, dass die durch eine Kugel, die sich an beliebiger Position aber gleicher Höhe im Tastfeld (13) befindet, verursachte Verminderung der vom Senderblock emittierten und vom Empfängerblock gemessenen Strahlung im Wesentlichen konstant ist.

8. Vorrichtung nach einem der Ansprüche 6 oder 7, **dadurch gekennzeichnet, dass** aufgrund des im Wesentlichen homogenen flächigen Tastfelds die projizierte Ausdehnung nicht in durch die Anzahl bzw. den Abstand der Sendeelemente (19) untereinander und der Anzahl bzw. den Abstand der Empfangselemente (25) untereinander vorgegebener, sondern wesentlich höherer Auflösung ermittelt wird.

9. Vorrichtung nach einem der Ansprüche 6 bis 8 **dadurch gekennzeichnet, dass** der Überwachungsbereich durch mehrere Tastfelder (13 bis 15) bzw. Sender/Empfängerblockpaare (29a bis 29c, 31a bis 31c) gebildet wird, die gleichgerichtet oder in einem Winkel, vorzugsweise senkrecht zueinander und in der gleichen Ebene oder in einem Abstand voneinander angeordnet sind, mit dem Ziel, dass mehr Informationen über passierende Objekte gewonnen werden können.

10. Vorrichtung nach einem der Ansprüche 6 bis 9, **dadurch gekennzeichnet, dass** ein kurzzeitiges Unterschreiten eines Schwellwertes durch eine vordefinierbare Lückenunterdrückungszeit verhindert, dass ein Objekt als "das Tastfeld verlassen habend" detektiert wird, obwohl dies noch nicht der Fall ist.

11. Verwendung des Verfahrens gemäss einem der Ansprüche 1 bis 5 und der Vorrichtung gemäss einem der Ansprüche 6 bis 10 zum Klassifizieren von Objekten anhand ihrer Verweilzeit, ihrer maximalen projizierten Ausdehnung, ihrer projizierten Fläche und/oder ihrer anhand der zeitpunkt- bzw. ortsabhängigen Ausdehnung ermittelten Form, wobei zur Gewinnung dieser Daten ein oder mehrere der zur Verfügung stehenden Tastfelder verwendet werden, und dass aufgrund einer erfolgten Klassifikation Aktionen ausgelöst werden können.

## Claims

1. Method for detecting and measuring objects when passing a monitored area (39), method for which
- a first block of emitters (29) placed on a first edge of the monitored area (39) includes, for the flat emission of preferably electromagnetic radiation, an emitting unit (17) that has a multitude of emitting elements (19) and
- a first block of receivers (31,), placed on a second edge of the monitored area (39) opposite to the first edge, that includes a receiving unit (23) with a multitude of receiving elements (25), that detects radiation emitted by the block of emitters (29), wherein
- the first block of emitters (29) and the first block of receivers (31) generate a first flat substantially homogeneous sensing area (13) that forms the monitored area and
- a control unit (33) that is connected with the first block of emitters and the first block of receivers for the control thereof,
wherein the radiation emitted by an emitting element is received by a multitude of receiving elements and that the radiation received by a receiving element has been emitted by a multitude of emitting elements, and the control unit (33) detects from the change caused by an object when passing the sensing area (13) the projected extension at different times, while the object passes the sensing area (13),
**characterized in**
**that** all the emitting elements (19) are operated synchronously, and two slot apertures (20, 26) are respectively provided in the block of emitters between the emitting elements and the radiation exit as well as in the block of receivers between the radiation entry and the receiving elements, with the aim of forming a flat sensing area.

2. Method according to claim 1, **characterized in that** the emitting elements and the receiving elements are selected, placed, oriented and/or operated in such a way that the reduction of the radiation emitted by the block of emitters and measured by the block of receivers, caused by a ball that is situated in the sensing area (13) at any position but at the same height is substantially constant.

3. Method according to any of the claims 1 or 2, **characterized in that** after the passing of the object its dwell time in the sensing area, its maximal extension projected onto the receiving unit (23), its projected area and/or its projected shape determined on the base of the time-dependent extension are calculated from the projected extension detected at different times, and these data are made available for a possible visualization.

4. Method according to one of the claims 1 to 3, **characterized in that** the monitored area is formed by several sensing areas (13 to 15) or pairs of blocks of emitters/receivers (29a to 29c, 31a to 31c) that are oriented in the same direction or at an angle, preferably perpendicularly to one another and placed in the same plane or spaced from one another, with the aim to be able to obtain more information about passing objects.

5. Method according to one of the claims 1 to 4, **characterized in that** a short-time dropping below a threshold by a predefineable gap suppression time avoids that an object is detected as "having left the sensing area", although this is not yet the case.

6. Device for detecting and measuring objects when passing a monitored area with
- a first block of emitters (29) placed on a first edge of the monitored area (39) that includes, for the flat emission of preferably electromagnetic radiation, an emitting unit (17) that has a multitude of emitting elements (19) and
- a first block of receivers (31,), placed on a second edge of the monitored area (39) opposite to the first edge, that includes a receiving unit (23) with a multitude of receiving elements (25), that detects radiation emitted by the block of emitters (29), wherein
- the first block of emitters (29) and the first block of receivers (31) generate a first flat substantially homogeneous sensing area (13) that forms the monitored area and
- a control unit (33) that is connected with the first block of emitters and the first block of receivers for the control thereof,
wherein the radiation emitted by an emitting element is received by a multitude of receiving elements and that the radiation received by a receiving element has been emitted by a multitude of emitting elements and the control unit (33) detects from the change caused by an object when passing the sensing area (13) the projected extension at different times, while the object passes the sensing area (13),
**characterized in**
**that** all the emitting elements (19) are operated synchronously and two slot apertures (20, 26) are respectively provided in the block of emitters between the emitting elements and the radiation exit as well as in the block of receivers between the radiation entry and the receiving elements, with the aim of forming a flat sensing area.

7. Device according to claim 6, **characterized in that** the emitting elements and the receiving elements are selected, placed, oriented and/or operated in such a way that the reduction of the radiation emitted by the block of emitters and measured by the block of receivers, caused by a ball that is situated in the sensing area (13) at any position but at the same height is substantially constant.

8. Device according to one of the claims 6 or 7, **characterized in that**, because of the substantially homogeneous flat sensing area, the projected extension is detected not with the resolution predetermined by the number or the distance of the emitting elements (19) from one another and the number or the distance of the receiving elements (25) from one another but with a substantially higher resolution.

9. Device according to one of the claims 6 to 8, **characterized in that** the monitored area is formed by several sensing areas (13 to 15) or pairs of blocks of emitters/receivers (29a to 29c, 31a to 31c) that are oriented in the same direction or at an angle, preferably perpendicularly to one another and placed in the same plane or spaced from one another, with the aim to be able to obtain more information about passing objects.

10. Device according to one of the claims 6 to 9, **characterized in that** a short-time dropping below a threshold by a predefineable gap suppression time avoids that an object is detected as "having left the sensing area", although this is not yet the case.

11. Use of the method according to one of the claims 1 to 5 and of the device according to one of the claims 6 to 10 for the classification of objects on the base of their dwell time, their maximal projected extension, their projected area and/or their shape determined on the base of the time-dependent or location-dependent extension, wherein one or several of the available sensing areas are used for obtaining these data and that actions can be triggered on the base of an effected classification.

## Revendications

1. Procédé pour détecter et mesurer des objets lors du passage d'une zone de surveillance (39), procédé pour lequel
- un premier bloc émetteur (29), placé sur un premier bord de la zone de surveillance (39), contient, pour l'émission plane de rayonnement de préférence magnétique, une unité émettrice (17) qui présente une pluralité d'éléments émetteurs (19) et
- un premier bloc récepteur (31), placé sur un second bord de la zone de surveillance (39) opposé au premier bord, qui contient une unité réceptrice (23) avec une pluralité d'éléments récepteurs (25), qui détecte le rayonnement émis par le bloc émetteur (29),
- le premier bloc émetteur (29) et le premier bloc récepteur (31) générant un premier panneau tactile plat substantiellement homogène qui forme la zone de surveillance et
- une unité de contrôle (33) qui est en relation avec le premier bloc émetteur et le premier bloc récepteur pour la commande de celle-ci,
cependant que le rayonnement émis par un élément émetteur est reçu par une multitude d'éléments récepteurs et que le rayonnement reçu par un élément récepteur a été émis par une multitude d'éléments émetteurs et l'unité de contrôle (33) détecte, à partir du changement du rayonnement reçu globalement par les éléments récepteurs (25) de l'unité de réception (23), causé par un objet lors du passage par le panneau tactile (13), l'extension projetée à différents moments pendant lesquels l'objet passe par le panneau tactile (13),
**caractérisé en ce**
**que** tous les éléments émetteurs (19) fonctionnent de manière synchrone et que deux diaphragmes à fente (20, 26) sont prévus respectivement dans le bloc émetteur entre les éléments émetteurs et la sortie du rayonnement ainsi que dans le bloc récepteur entre l'entrée du rayonnement et les éléments récepteurs dans le but de former un panneau tactile plat.

2. Procédé selon la revendication 1, **caractérisé en ce que** les éléments émetteurs et les éléments récepteurs sont sélectionnés, placés, orientés et/ou fonctionnent de telle manière que la réduction du rayonnement émis par le bloc émetteur et mesuré par le bloc récepteur, provoquée par une bille qui se trouve à n'importe quelle position mais à la même hauteur dans le panneau tactile (13), est sensiblement constante.

3. Procédé selon l'une des revendications 1 ou 2, **caractérisé en ce qu'**après le passage de l'objet, son temps de séjour dans le panneau tactile, son extension maximale projetée sur l'unité réceptrice (23), sa surface projetée et/ou sa forme projetée déterminée à l'aide de l'extension en fonction du moment à partir de l'extension de l'objet projetée déterminée à différents moments sont calculées à partir de l'extension projetée de l'objet détectée à différents moments et ces données sont mises à disposition pour une éventuelle visualisation.

4. Procédé selon l'une des revendications 1 à 3, **caractérisé en ce que** la zone de surveillance est formée par plusieurs panneaux tactiles (13 à 15) ou paires de blocs émetteurs/récepteurs (29a à 29c, 31a à 31c) qui sont placés orientés dans le même sens ou dans un angle, de préférence perpendiculairement l'un à l'autre et dans le même plan ou à une distance, dans le but de pouvoir obtenir plus d'informations sur les objets qui passent.

5. Procédé selon l'une des revendications 1 à 4, **caractérisé en ce qu'**un sous-dépassement de courte durée d'un seuil par un temps de suppression de vide empêche qu'un objet soit détecté comme « ayant quitté le panneau tactile » bien que ce ne soit pas encore le cas.

6. Dispositif pour détecter et mesurer des objets lors du passage d'une zone de surveillance avec
- un premier bloc émetteur (29), placé sur un premier bord de la zone de surveillance (39) qui contient pour l'émission plane de rayonnement de préférence magnétique une unité émettrice (17) qui présente une pluralité d'éléments émetteurs (19) et
- un premier bloc récepteur (31), placé sur un second bord de la zone de surveillance (39) opposé au premier bord, qui contient une unité réceptrice (23) avec une pluralité d'éléments récepteurs (25), qui détecte le rayonnement émis par le bloc émetteur,
- le premier bloc émetteur (29) et le premier bloc récepteur (31) générant un premier panneau tactile (13) plat substantiellement homogène qui forme la zone de surveillance et
une unité de contrôle (33) qui est en relation avec le premier bloc émetteur et le premier bloc récepteur pour la commande de celle-ci,
cependant que le rayonnement émis par un élément émetteur est reçu par une multitude d'éléments récepteurs et que le rayonnement reçu par un élément récepteur a été émis par une multitude d'éléments émetteurs et l'unité de contrôle (33) détecte, à partir du changement du rayonnement reçu globalement par les éléments récepteurs (25) de l'unité de réception (23), causé par un objet lors du passage par le panneau tactile (13), l'extension projetée à différents moments pendant lesquels l'objet passe par le panneau tactile (13),
**caractérisé en ce**
**que** tous les éléments émetteurs (19) fonctionnent de manière synchrone et que deux diaphragmes à fente (20, 26) sont prévus respectivement dans le bloc émetteur entre les éléments émetteurs et la sortie du rayonnement ainsi que dans le bloc récepteur entre l'entrée du rayonnement et les éléments récepteurs dans le but de former un panneau tactile plat.

7. Dispositif selon la revendication 6, **caractérisé en ce que** les éléments émetteurs et les éléments récepteurs sont sélectionnés, placés, orientés et/ou fonctionnent de telle manière que la réduction du rayonnement émis par le bloc émetteur et mesuré par le bloc récepteur, provoquée par une bille qui se trouve à n'importe quelle position mais à la même hauteur dans le panneau tactile (13), est sensiblement constante.

8. Dispositif selon l'une des revendications 6 ou 7, **caractérisé en ce qu'**en raison du panneau tactile plat sensiblement homogène l'extension projetée n'est pas détectée dans une résolution prédéterminée par le nombre ou l'espace des éléments émetteurs (19) entre eux et le nombre ou l'espace des éléments récepteurs (25) entre eux mais dans une résolution considérablement supérieure.

9. Dispositif selon l'une des revendications 6 à 8, **caractérisé en ce que** la zone de surveillance est formée par plusieurs panneaux tactiles (13 à 15) ou paires de blocs émetteurs/récepteurs (29a à 29c, 31a à 31c) qui sont placés orientés dans le même sens ou dans un angle, de préférence perpendiculairement l'un à l'autre et dans le même plan ou à une distance, dans le but de pouvoir obtenir plus d'informations sur les objets qui passent.

10. Dispositif selon l'une des revendications 6 à 9, **caractérisé en ce qu'**un sous-dépassement de courte durée d'un seuil par un temps de suppression de vide empêche qu'un objet soit détecté comme « ayant quitté le panneau tactile » bien que ce ne soit pas encore le cas.

11. Utilisation du procédé selon l'une des revendications 1 à 5 et du dispositif selon l'une des revendications 6 à 10 pour la classification d'objets à l'aide de leur temps de séjour, de leur extension projetée maximale, de leur surface projetée et/ou de leur forme détectée dépendant de l'extension dépendant du moment ou du lieu, cependant que pour obtenir ces données un ou plusieurs des panneaux tactiles disponibles sont utilisés et que des actions peuvent être déclenchées en raison d'une classification qui a eu lieu.
